Europäisches Patentamt

European Patent Office

Office européen des brevets

(11) Publication number: **0 139 399**
**B1**

(12) **EUROPEAN PATENT SPECIFICATION**

(45) Date of publication of patent specification: **22.02.89**    (51) Int. Cl.⁴: **F 16 K 47/04**

(21) Application number: **84305760.5**

(22) Date of filing: **23.08.84**

(54) **Pressure reducing valve.**

(30) Priority: **10.09.83 GB 8324284**

(43) Date of publication of application:
**02.05.85 Bulletin 85/18**

(45) Publication of the grant of the patent:
**22.02.89 Bulletin 89/08**

(84) Designated Contracting States:
**AT BE CH DE FR GB IT LI LU NL SE**

(56) References cited:
**EP-A-0 053 290**
**DD-A- 77 630**
**DE-A-2 209 230**
**DE-A-3 045 057**

(73) Proprietor: **KENT PROCESS CONTROL LIMITED**
**ARMYTAGE ROAD INDUSTRIAL ESTATE**
**ARMYTAGE ROAD**
**BRIGHOUSE WEST YORKSHIRE HD6 1QF (GB)**

(72) Inventor: **Gates, Eric Kent Process Control Ltd.**
**Armytage Road Industrial Estate Armytage**
**Road**
**Brighouse W. Yorkshire (GB)**

(74) Representative: **Atkinson, Peter Birch et al**
**WHEATLEY & MACKENZIE Scottish Life House**
**Bridge Street**
**Manchester M3 3DP (GB)**

Courier Press, Leamington Spa, England.

## Description

This invention relates to a pressure reducing valve.

In flow control valves producing high pressure drops there may be problems associated with cavitation. When the pressure in a liquid is less than the vapour pressure thereof, such as might be the case after throttling of the liquid, vapour bubbles form in the liquid. Subsequent pressure recovery causes the vapour bubbles to collapse with the generation of shock waves (i.e cavitation) which can lead to damage of the valve.

In order to prevent cavitation it is known to produce valves in which the overall pressure reduction is effected in a number of successive stages so that the pressure reduction at any one stage is not sufficient to produce cavitation.

EP—A—0 053 290 describes a valve having a pressure reducing assembly which comprises an outer tubular guide element having a plurality of axially spaced inner guide formations, and an inner flow control sleeve which is slidable on the guide formations such that a plurality of axially spaced first chambers are defined between the sleeve and the guide element. Adjacent the valve inlet, the guide element has a set of pressure reducing orifices. The flow control sleeve has an inner second chamber provided in the wall thereof with pressure reducing apertures and flow transfer passageways. The arrangement is such that, in the open position of the valve, fluid passes serially through the first and second chambers to the valve outlet. Passage of the fluid from one first chamber to the next downstream first chamber takes place by virtue of the fluid passing through the pressure reducing orifices in the second chamber and from there *via* the flow transfer passageways into the next first chamber.

A further example of valve in which pressure reduction is effected in a number of successive stages is shown in DD—A—77630.

According to the present invention there is provided a pressure reducing valve comprising a valve body with an inlet and an outlet and a pressure reducing assembly providing communication therebetween, the pressure reducing assembly comprising

an outer tubular guide element having a plurality of first pressure reducing orifices and a plurality of axially spaced inner guide formations and

an inner flow control sleeve slidable on said guide formations so as to define a plurality of axially spaced first chambers between the guide element and the sleeve,

said sleeve having at least one second inner chamber which has a plurality of second pressure reducing orifices in the outer wall thereof,

said sleeve being axially movable between a first position in which said second pressure reducing orifices register with a respective first chamber and a second position in which said second pressure reducing orifices are closed to fluid flow by said guide formations, and

said pressure reducing assembly having a plurality of flow transfer passageways arranged such that in the first position of the sleeve fluid flow from the inlet to the outlet is through the first chambers, the flow transfer passageways, and the second chamber, characterised in that

the second pressure reducing orifices are arranged in axially spaced sets, the spacing between the sets of the second chamber being such that, in the first position of the sleeve, each of the sets of any one second chamber locates on either side of a guide formation so that the interior of the second chamber provides communication between the first chambers with which the second pressure reducing orifices of the sleeve register, and in that the flow transfer passageways are provided in said guide formations, to provide communication between a downstream set of second orifices of a second chamber and the outlet of the valve.

Preferably, the valve comprises two second chambers and the flow transfer passageways are provided in the guide formations to provide communication between a downstream set of second orifices of a second chamber and the upstream set of second orifices of the next second chamber.

In the valve of the invention, the flow transfer passageways are provided in the fixed outer guide element. This alleviates vibration as compared to a valve in which the flow transfer passageways are provided in the flow control sleeve, and gives the valve a greater inherent stability.

The guide element and flow sleeve may be formed as an insertable cartridge which allows these components to be made of wear resistant materials. A balancing tube may be provided to offset the high forces generated by the large pressure drops required.

The invention will be further described by way of example only with reference to the accompanying drawings, in which;

Fig. 1. is a sectional view of one embodiment of pressure reducing valve in accordance with the invention; and

Fig. 2. is a sectional view to an enlarged scale of part of the valve shown in Fig. 1.

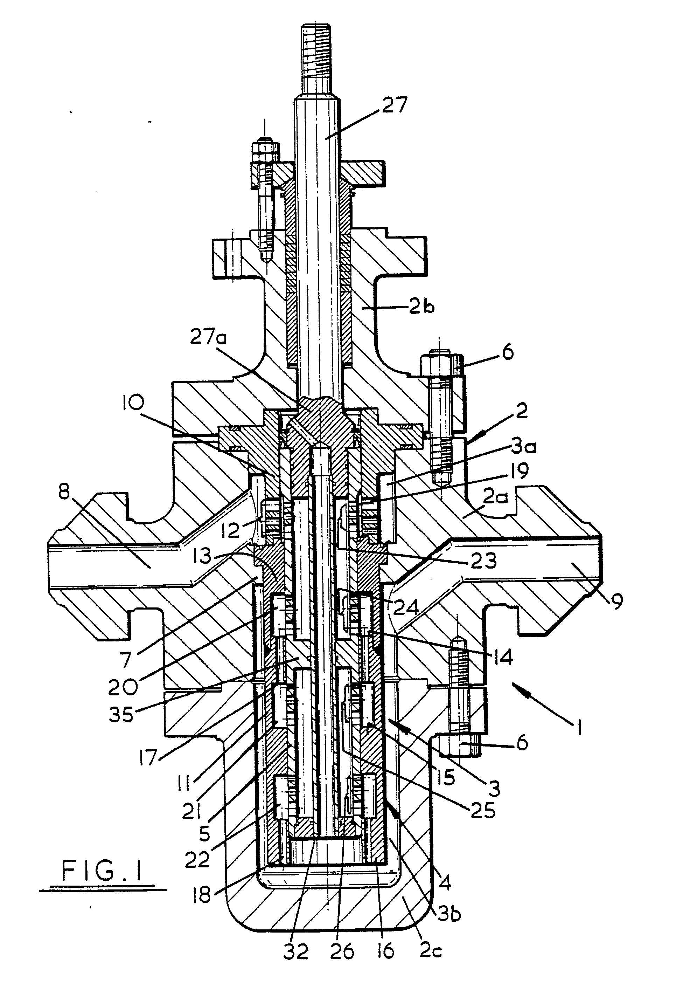

The valve 1 shown in Fig. 1 comprises a body 2 housing in a central chamber 3 thereof a pressure reducing assembly itself comprised of an outer guide element 4 and an inner apertured flow control sleeve 5 slidable within guide element 4.

The body 2 of the valve 1 is itself comprised of a central section 2a and two end sections 2b and 2c mounted in position by bolts 6. Body section 2a has an integral stepped annular flange 7 which cooperates with guide element 4 to subdivide chamber 3 into chambers 3a and 3b, respectively to the top and bottom of the flange 7 as viewed in Fig. 1. A fluid inlet 8 provided in body section 2a communicates with chamber 3a and a fluid outlet 9 also in body section 2a communicates with chamber 3b as shown.

Guide element 4 is for ease of manufacture comprised of a first sleeve 10 located in chamber 3a and a coaxial second sleeve 11 extending within chamber 3b but terminating short of the lower end thereof as viewed in Fig. 1. It will be seen that the upper end of sleeve 11 is stepped and is mounted on the complementary step formation of annular flange 7 thereby isolating chambers 3a and 3b. Sleeve 10 is mounted at its upper end in body sections 1b and 1c as shown and at its lower end is located on sleeve 11 again as shown.

A plurality of orifices 12 registering with chamber 3a and arranged in axially spaced circumferential rows are provided in sleeve 10. In the illustrated embodiment, three such rows are provided but it will be appreciated that a different number may be used, if desired. The apertures of any one row are of the same diameter but the diameter of the apertures increases towards the top of the sleeve 10.

Sleeve 11 is provided with a plurality, in this case four, of integral inner annular flanges which as viewed from top to bottom in the drawings are referenced as 13, 14, 15 and 16. Flange 13 is located in the region of flange 7 whereas flange 16 is located at the lower end of guide element 4, projections 14 and 15 being located therebetween. The aperture defined by each of the annular flanges 13—16 is of the same inner diameter but this is slightly less than the inner diameter of sleeve 10 for reasons which will be appreciated.

The annular flanges 14 and 16 each have a plurality of axailly extending flow passageways 17 and 18 respectively extending therethrough. The function of their passageways will be clear from the subsequent description.

Flow control sleeve 5 extends within both sleeves 10 and 11. At its upper end and over parts of the length that it extends within sleeve 10, sleeve 5 has an enlarged head portion 5a slidable on the inner surface of sleeve 10. For the remainder of its length flow control sleeve 5 is of a diameter such that it is in sliding engagement with flanges 13 to 16 and defines an annular chamber 19 in sleeve 10. It will be noted that the flow control sleeve 5 together with the flanges 13—16 defines three annular chambers 20, 21 and 22 (as numbered from top to bottom). It will also be noted that chambers 20 and 21 are in communication with each other via passageways 17 and that chamber 22 communicates with chamber 3b via passageways 18.

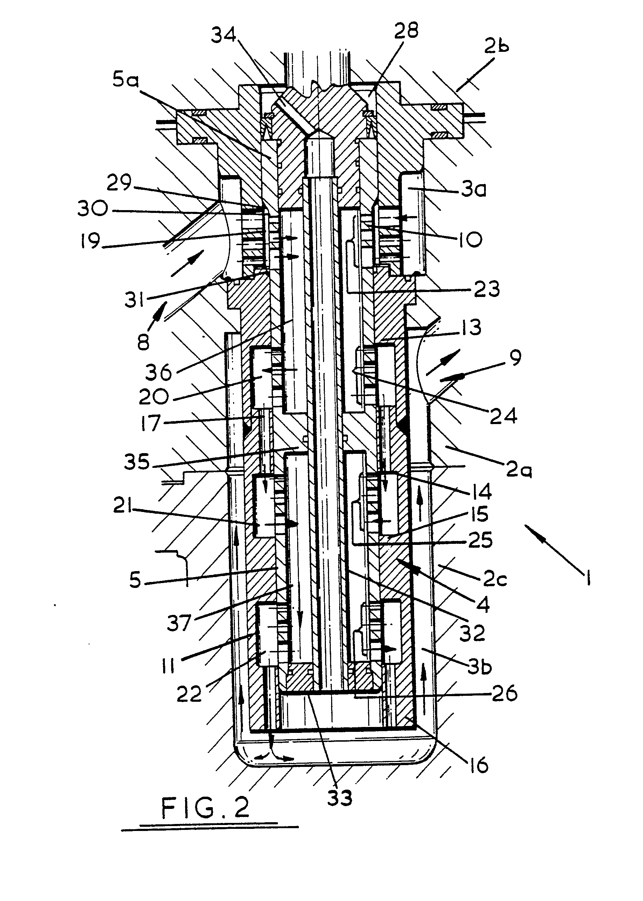

As mentioned previously, flow control sleeve 5 is slidable within guide element 4 and as illustrated in Figs. 1 and 2 is at its extreme upper position of movement.

Sleeve 5 has a plurality of sets of apertures 23, 24, 25 and 26. The sets of apertures are each arranged in axially spaced circumferential rows and are positioned such that, in the position of the flow control sleeve 5 illustrated in the drawings, apertures 23 are all in communication with apertures 12 and apertures 24, 25 and 26 respectively register with chambers 20, 21 and 22. In the illustrated position of sleeve 5, the lower rows of each of apertures 23, 24, 25 and 26 are respectively located just above flanges 13, 14, 15 and 16 whilst upper row of apertures 24, 25 and 26 are respectively located just below of flanges 13, 14 and 15.

As mentioned above, the sets of apertures 23—26 are arranged in axially spaced circumferential rows. In each set, the apertures of any one row are of the same diameter but within the set the diameter of the apertures increase from top to bottom.

Apertures 23—26 function as pressure reducing apertures and are dimensioned as required to produce the desired pressure drop, in the manner well understood in this field.

An actuator rod 27 (connectable to an actuator not shown) is mounted by its head portion 27a on flow control sleeve 5 and serves to effect the sliding movement of sleeve 5 to which reference has previously been made. The upper movement of flow control sleeve 5 is limited by head portion 27a abutting against body section 2b. The head portion 27a is however shaped such that a cavity 28 is defined within sleeve 10, even at the extreme upper position of sleeve 5.

Downward movement of flow control sleeve 5 is limited by its head 5a. The transition between this head 5a and the remainder of the sleeve 5 is a frusto-conical face 29 and the upper row of the set of apertures 23 is spaced from the base of face 29 by a section 30 of sleeve 5.

Section 30 is of a length corresponding to the depth of an annular recess 31 provided in annular flange 13 and it will be seen that face 29 effectively, provides a seating face for flow sleeve 5 on flange 13.

On movement of flow sleeve 5 to its extreme lower position, section 30 locates in recess 31. At this position, apertures 23, 24, 25 and 26 are respectively closed by flanges 13, 14, 15 and 16.

Furthermore, apertures 12 are closed by the head 5a of flow sleeve 5. The various apertures are of course opened by upwards movement of flow control sleeve 5. On such movement, head 5a of sleeve 5 opens the lower row of the set of apertures 12 before the upper row of apertures 23 is exposed beyond flange 13. This is of course attributable to the frusto-conical face 29 and section 30 which thus together provide a 'dead band' arrangement.

Within flow control sleeve 5 is a concentrically mounted balancing tube 32 extending from a supporting plug 33 closing the lower end of sleeve 5 to the head portion 27a of actuator rod 27. Balancing tube 32 communicates at its lower end with chamber 3b and at its upper end with cavity 28 via conduit 34 in head portion 27a.

Furthermore, flow control sleeve 5 is internally partitioned into chambers 36 and 37 by an integral annular flange 35 located around balancing tube 32. The chamber 36 provides communication between apertures 23 and 24 but is isolated from chamber 37 which serves to provide communication between apertures 25 and 26.

The operation of valve 1 will be described.

In use of the valve inlet 8 is of course connected to a source of high pressure fluid (not shown).

In the initial condition, flow sleeve 5 is at its extreme lower position so that the valve is closed. As flow sleeve 5 is moved upwardly, the lower row of apertures 12 is opened but initially the upper row of apertures 23 remains closed owing to the 'dead band' arrangement. Thus plug seating face 29 is moved outside the high velocity flow stream before holes 23 are exposed. This protects the seating face from the effects of wire drawing and erosion at low flow rates.

As flow sleeve 5 is moved further upwardly, the apertures 23 are exposed beyond flange 13 and similarly apertures 24, 25 and 26 are respectively exposed beyond flanges 14, 15 and 16. Fluid can now flow through the valve, in the manner explained in more detail below, in the direction of the arrows shown in Fig. 2.

Fluid entering through inlet 8 passes through apertures 12 into chamber 19. This causes an initial pressure reduction, although the main purpose of sleeve 10 is to act as a guide for flow sleeve 5.

Subsequently, fluid passes radially inwardly through apertures 23 into chamber 36 and this causes a pressure reduction depending on the number and size of apertures 23 exposed. Additionally, jets of fluid passing into chamber 36 impinge upon each other, thus destroying energy and causing further reducing pressure.

Fluid next passes radially outwardly through apertures 24 into chamber 20, experiencing a further pressure reduction. From chamber 20 fluid passes along flow transfer passageways 17 into chamber 21 from where it passes sequentially through apertures 25 and 26 with pressure reduction in the same way as described for apertures 23 and 24.

Fluid then passes into chamber 3b via passageways 18. In chamber 3b the direction of fluid flow is reversed and fluid finally passes through outlet 9, the required pressure drop having been achieved.

Throughout the pressure reduction, the fluid encounters comparatively high pressures on its exit from the various apertures 23—26 and this gives high resistance to cavitation.

It will be appreciated that advantage has been taken in the valve design to generate a number of flow directional changes which are complimentary to the number of direct pressure reduction stages to give smooth operation of the valve.

**Claims**

1. A pressure reducing valve comprising a valve body (2) with an inlet (8) and an outlet (9) and a pressure reducing assembly (4, 5) providing communication therebetween, the pressure reducing assembly comprising

an outer tubular guide element (4) having a plurality of first pressure reducing orifices (12) and a plurality of axially spaced inner guide formations (13, 14, 15, 16), and

an inner flow control sleeve (5) slidable on said guide formations so as to define a plurality of axially spaced first chambers (19, 20, 21, 22) between the guide element (4) and the sleeve (5),

said sleeve having at least one second inner chamber (36, 37) which has a plurality of second pressure reducing orifices (23, 24, 25, 26) in the outer wall thereof,

said sleeve (5) being axially movable between a first position in which said second pressure reducing orifices (23, 24, 25, 26) register with a respective first chamber (19, 20, 21, 22) and a second position in which said second pressure reducing orifices are closed to fluid flow by said guide formations, and

said pressure reducing assembly having a plurality of flow transfer passageways (17, 18) arranged such that in the first position of the sleeve, fluid flow from the inlet to the outlet is through the first chambers, the flow transfer passageways, and the second chamber, characterised in that

the second pressure reducing orifices (23, 24, 25, 26) are arranged in axially spaced sets, the spacing between the sets of the second chamber (36, 37) being such that, in the first position of the sleeve, each of the sets of any one second chamber (36, 37) locates on either side of a guide formation (13, 15) so that the interior of the second chamber (36, 37) provides communication between the first chambers (19, 20; 21, 22) with which the second pressure reducing orifices (23, 24; 25, 26) of the sleeve register, and in that the flow transfer passageways (17, 18) are provided in said guide formations (14, 16), to provide communication between a downstream set of second orifices (24) of a second chamber (36) and the outlet (9) of the valve.

2. A valve as claimed in claim 1 comprising wo second chambers (36, 37) and wherein the flow transfer passageways (17, 18) are provided in the guide formations (14, 16) to provide communication between a downstream set of second orifices (24) of a second chamber (36) and the upstream set of second orifices (25) of the next second chamber.

3. A valve as claimed in claim 1 or 2, wherein alternate guide formations (14, 16) have flow transfer passageways (17, 18) for transfer of fluid from a first chamber (20, 22) into which fluid has flowed outwardly of the sleeve (5) to the next downstream first chamber (21).

4. A valve as claimed in any one of claims 1 to 3, wherein said second pressure reducing orifices (23, 24, 25, 26) in each of said sets are arranged in axially spaced circumferential rows.

5. A valve as claimed in claim 3, wherein, within any one set of second pressure reducing orifices (23, 24, 25, 26), the orifices of each row are of the same diameter and, within said set, the orifices increase in diameter in the direction of fluid flow through the sleeve.

6. A valve as claimed in any one of claims 1 to 5 wherein said flow control sleeve (5) has a head (5a) adapted to open and close said first pressure reducing orifices (12).

7. A valve as claimed in claim 6, wherein said head (5a) has a frusto-conical surface (29) spaced from the adjacent set of orifices (23) in the flow control sleeve by a short section (30) of the sleeve and the guide formation (13) adjacent said head has an annular recess (31) in which said short sectionn locates when sleeve is in said second position whereby said frusto-conical surface and said short section provide a dead-band arrangement.

8. A valve as claimed in any one of claims 1 to 7, wherein said flow control sleeve (5) is provided with a balancing tube assembly (32, 34) which extends internally of the sleeve (5) providing an inner wall for the chambers (36, 37).

**Patentansprüche**

1. Druckreduzierventil, mit einem Ventilkörper (2) mit einem Einlaß (8) und einem Auslaß (9) und einer Druckreduzieranordnung (4, 5), die eine Verbindung zwischen ihnen bildet, wobei die Druckreduzieranordnung folgendes aufweist:

ein äußeres rohrförmiges Führungselement (4) mit einer Vielzahl von ersten Druckreduzieröffnungen (12) und einer Vielzahl von axial beabstandeten inneren Führungskörpern (13, 14, 15, 16), und

eine innere Strömungssteuerhülse (5), die auf den Führungskörpern verschiebbar ist, um eine Vielzahl von axial beabstandeten ersten Kammern (19, 20, 21, 22) zwischen dem Führungselement (4) und der Hülse (5) zu bilden,

wobei die Hülse mindestens eine zweite innere Kammer (36, 37) aufweist, die eine Vielzahl von zweiten Druckreduzieröffnungen (23, 24, 25, 26) in ihrer Außenwand hat, wobei die Hülse (5) axial beweglich ist zwischen einer ersten Position, in der die zweiten Druckreduzieröffnungen (23, 24, 25, 26) mit einer entsprechenden ersten Kammer (19, 20, 21, 22) übereinstimmen, und einer zweiten position, in der die zweiten Druckreduzieröffnungen für eine Fluidströmung durch die Führungskörper geschlossen sind, und

wobei die Druckreduzieranordnung eine Vielzahl von Strömungsübergangspassagen (17, 18) aufweist, die so angeordnet sind, daß in der ersten Position der Hülse die Fluidströmung vom Einlaß zum Auslaß durch die ersten Kammern, die Strömungsübergangspassagen und die zweite Kammer erfolgt, dadurch gekennzeichnet, daß die zweiten Druckreduzieröffnungen (23, 24, 25, 26) in axial beabstandeten Sätzen angeordnet sind, wobei der Abstand zwischen den Sätzen der zweiten Kammer (36, 37) so gewählt ist, daß in der ersten Position der Hülse jeder der Sätze von irgendeiner der zweiten Kammern (36, 37) sich zu beiden Seiten eines Führungskörpers (13, 15) befindet, so daß der Innenraum der zweiten Kammer (36, 37) eine Verbindung zwischen den ersten Kammern (19, 20; 21, 22) bildet, mit denen die zweiten Druckreduzieröffnungen (23, 24; 25, 26) der Hülse übereinstimmen, und daß die Strömungsübergangspassagen (17, 18) in den Führungskörpern (14, 16) so vorgesehen sind, daß sie eine Verbindung zwischen einem stromabwärtigen Satz von zweiten Öffnungen (24) einer zweiten Kammer (36) und dem Auslaß (9) des Ventils bilden.

2. Ventil nach Anspruch 1, umfassend zwei zweite Kammern (36, 37) und wobei die Strömungsübergangspassagen (17, 18) in den Führungskörpern (14, 16) so vorgesehen sind, daß sie eine Verbindung zwischen einem stromabwärtigen Satz von zweiten Öffnungen (24) einer zweiten Kammer (36) und dem stromaufwärtigen Satz von zweiten Öffnungen (25) der nächsten zweiten Kammer bilden.

3. Ventil nach Anspruch 1 oder 2, wobei abwechselnde Führungskörper (14, 16) Strömungsübergangspassagen (17, 18) für den Übergang des Fluids aus einer ersten Kammer (20, 22), in die Fluid außerhalb der Hülse (5) geströmt ist, zur nächsten stromabwärtigen ersten Kammer (21) haben.

4. Ventil nach einem der Ansprüche 1 bis 3, wobei die zweiten Druckreduzieröffnungen (23, 24, 25, 26) in jedem der Sätze in axial beabstandeten Umfangsreihen angeordnet sind.

5. Ventil nach Anspruch 3, wobei innerhalb eines Satzes von zweiten Druckreduzieröffnungen (23, 24, 25, 26) die Öffnungen jeder Reihe den gleichen Durchmesser haben und, innerhalb dieses Satzes, die Öffnungen im Durchmesser in der. Strömungsrichtung des Fluids durch die Hülse zunehmen.

6. Ventil nach einem der Ansprüche 1 bis 5, wobei die Strömungssteuerhülse (5) einen Kopf (5a) aufweist, der zum Öffnen und Schließen der ersten Druckreduzieröffnungen (12) ausgelegt ist.

7. Ventil nach Anspruch 6, wobei der Kopf (5a) eine kegelstumpfförmige Fläche (29) hat, die von dem benachbarten Satz von Öffnungen (22) in der Strömungssteuerhülse um einen kurzen Abschnitt (30) der Hülse beabstandet ist und der Führungskörper (13) benachbart dem Kopf eine ringförmige Aussparung (31) hat, in der sich der kurze Abschnitt befindet, wenn die Hülse in ihrer zweiten Position ist, so daß die kegelstumpfförmige Fläche und der kurze Abschnitt eine Anordnung mit toter Zone bilden.

8. Ventil nach einem der Ansprüche 1 bis 7, wobei die Strömungssteuerhülse (5) mit einer Ausgleichsrohranordnung (32, 34) versehen ist, die sich innerhalb der Hülse (5) erstreckt und eine Innenwand für die Kammern (36, 37) bildet.

**Revendications**

1. Vanne réductrice de pression comprenant un corps de vanne (2) avec une entrée (8) et une sortie (9) et un agencement réducteur de pression (4, 5) établissant une communication entre celles-ci, l'agencement réducteur de pression comprenant

un élément de guidage tubulaire extérieur (4) ayant une pluralité de premiers orifices réducteurs de pression (12) et une pluralité de formations de guidage intérieurs (13, 14, 15, 16) espacées axialement, et

une gaîne (5) pour le contrôle du débit intérieur, coulissant sur lesdites formations de guidage de façon à définir une pluralité de premières chambres (19, 20, 21, 22) espacées axialement, entre l'élément du guidage (4) et la gaîne (5),

ladite gaîne ayant au moins une seconde chambre intérieure (36, 37) qui possède une pluralité de seconds orifices réducteurs de pression (23, 24, 25, 26) dans sa paroi extérieure.

ladite gaîne (5) étant mobile axialement entre une première position dans laquelle lesdits seconds oricices réducteurs de pression (23, 24, 25, 26) communiquent avec une première chambre respective (19, 20, 21, 22) et une seconde position dans laquelle lesdits seconds orifices réducteurs de pression sont fermés à l'écoulement du fluide par lesdites formations de guidage et

ledit agencement réducteur de pression comprenant une pluralité de passages de transfert d'écoulement (17, 18) agencés de façon que dans la première position de la gaîne, le fluide s'écoulant de l'entrée vers la sortie traverse les premières chambres, les passages de transfert d'écoulement et la second chambre, caractérisé en ce que

les seconds orifices réducteurs de pression (23, 24, 25, 26) sont disposés en groupes séparés axialement, l'espacement entre les groupes de la second chambre (36, 37) étant tel que dans la première position de la gaîne, chacun des groupes de l'une quelconque des secondes chambres (36, 37) soit placé sur un côté d'une formation de guidage (13, 15) de façon que l'intérieur de la seconde chambre (36, 37) établisse une communication entre les premières chambres (19, 20, 21, 22) avec lesquelles les seconds orifices réducteurs de pression (23, 24, 25, 26) de la gaîne communiquent, et que les passages de transfert d'écoulement (17, 18) sont prévus dans lesdites formations de guidage (14, 16) afin d'établir une communication entre un groupe en aval de seconds orifices (24) d'une seconde chambre (36) et la sortie (9) de la vanne.

2. Vanne selon la revendication 1, comprenant deux secondes chambres (36, 37) et dans laquelle les passages de transfert d'écoulement (17, 18) sont prévus dans les formations de guidage (14, 16) pour établir une communication entre un groupe en aval de seconds orifices (24) d'une seconde chambre (36) et le groupe en amont de seconds orifices (25) de la seconde chambre suivante.

3. Vanne selon la revendication 1 ou 2, dans laquelle des formations de guidage alternées (14, 16) comprennent des passages de transfert d'écoulement (17, 18) pour le transfert du fluide à partir d'une première chambre (20, 22), dans laquelle le fluide a pénétré en sortant de la gaîne (5), dans la première chambre en aval suivante (21).

4. Vanne selon l'une quelconque des revendications 1 à 3, dans laquelle lesdits seconds orifices réducteurs de pression (23, 24, 25, 26) sont agencés dans chaque groupe suivant des rangées circonférentielles espacées axialement.

5. Vanne selon la revendication 3, dans laquelle, à l'intérieur de l'un quelconque des groupes de seconds orifices réducteurs de pression (23, 24, 25, 26), les orifices de chaque rangée ont le même diamètre, et, à l'intérieur dudit groupe, le diamètre des orifices augmente dans le sens de l'écoulement du fluide à travers la gaîne.

6. Vanne selon l'une quelconque des revendications 1 à 5, dans laquelle ladite gaîne (5) de contrôle de débit présente une têté (5a) adaptée à ouvrir et fermer lesdits premiers orifices réducteurs de pression (12).

7. Vanne selon la revendication 6, dans laquelle ladite tête (5a) présente une surface tronconique (29), espacée du groupe adjacent d'orifices (23) dans la gaîne de contrôle de débit par un court segment (30) de la gaîne, et la formation de guidage (13) adjacente à ladite tête présente une cavité annulaire (31) dans laquelle se trouve ledit segment court lorsque la gaine est dans ladite seconde position, ladite surface tronconique et ledit segment court produisant un agencement de zone inactive.

8. Vanne selon l'une quelconque des revendications 1 à 7, dans laquelle ladite gaîne (5) de contrôle de débit est munie d'une ensemble de tube d'équilibrage (32, 34) qui s'étend à l'intérieur de la gaîne (5), constituant une paroi intérieure pour le chambre (36 37).

EP 0 139 399 B1

FIG.1

FIG. 2